# FASCICULE DE BREVET EUROPEEN

(11) **EP 1 053 118 B1**
(45) Date de publication et mention de la délivrance du brevet: **25.08.2004**
(21) Numéro de dépôt: 99957368.6
(22) Date de dépôt: 03.12.1999
(51) Int. Cl.: B60H 1/00, G05G 5/06

(54) **DISPOSITIF DE COMMANDE COMPORTANT DES MOYENS DE CRANTAGE**
BETÄTIGUNGSVORRICHTUNG MIT RASTVORRICHTUNG
CONTROL DEVICE COMPRISING NOTCHING MEANS

(30) Priorité: 08.12.1998 FR 9815471
(43) Date de publication de la demande: 22.11.2000
(73) Titulaire: VALEO CLIMATISATION, 78321 La Verrière (FR)
(72) Inventeur: LACROIX, Louis, Jean-Michel, F-94500 Champigny sur Marne (FR)
(86) Numéro de dépôt international: PCT/FR1999/003018
(87) Numéro de publication internationale: WO 2000/034064

(56) Documents cités:
- DE-A- 3 914 627
- US-A- 4 165 164
- US-A- 5 680 797

## Description

L'invention concerne un dispositif de commande comportant un bouton de commande monté à rotation autour d'un axe sur un boîtier, un organe de manoeuvre monté mobile sur ledit boîtier et susceptible d'être déplacé par rotation dudit bouton de commande et des moyens de crantage susceptibles d'immobiliser ledit dispositif par rapport audit boîtier dans une position choisie parmi plusieurs positions prédéterminées.

Ces dispositifs de commande sont couramment utilisés dans l'industrie automobile, notamment pour la commande des volets des dispositifs de chauffage ventilation et/ou climatisation. L'organe de manoeuvre agit dans ce cas sur un câble de commande de l'ouverture d'au moins un volet. Les moyens de crantage sont destinés à immobiliser le dispositif de commande dans une position de réglage choisie par l'utilisateur, grâce à un repérage sur la façade du tableau de commande, afin d'empêcher un déréglage ultérieur par suite des trépidations subies par le véhicule.

Le crantage des boutons de commande se fait en général par un plongeur qui est sollicité par un ressort et qui vient frotter sur des crans lors de la rotation du bouton de commande. Le plongeur et le ressort peuvent être remplacés par une lamelle élastique.

Dans l'état actuel de la technique, les moyens de crantage sont décentrés par rapport à l'axe de rotation du bouton de commande. Le plongeur peut être fixé sur le boîtier, dans ce cas les crans sont prévus sur un élément lié au bouton de commande ou éventuellement à l'organe de manoeuvre. Dans d'autres constructions, les crans sont prévus sur le boîtier et le plongeur est porté soit par le bouton de commande soit pas l'organe de manoeuvre.

De tels dispositifs sont illustrés par exemple dans US-A-4 165 164.

Ces dispositions nécessitent une conformation spéciale du boîtier afin d'y former les crans ou le logement du plongeur. Lorsque le plongeur est porté par le bouton de commande ou l'organe de manoeuvre, il est nécessaire de prévoir dans le boîtier ou près du boîtier un espace libre pour permettre le pivotement du plongeur autour de l'axe de rotation du bouton.

Le but de l'invention est de proposer un dispositif de commande dans lequel la disposition des moyens de crantage permet de réduire l'encombrement global du dispositif et de simplifier la forme du boîtier.

L'invention atteint son but par le fait que les moyens de crantage comportent un plongeur mobile disposé dans l'axe de rotation du bouton de commande et maintenu en appui contre une zone crantée de l'organe de manoeuvre par des moyens élastiques.

Ainsi, le boîtier ne présente pas de crans ni de logement pour le plongeur. Sa construction est par le fait même simplifiée. En outre, le plongeur étant prévu mobile dans l'axe de rotation du bouton de commande, il n'y a pas de déplacement du plongeur autour de l'axe de rotation du bouton de commande. L'encombrement global du dispositif est ainsi limité.

Cette disposition permet en outre d'associer le crantage à l'organe de manoeuvre, et de définir l'angle de rotation du bouton de commande entre deux crantages selon l'appareil commandé par le déplacement de l'organe de manoeuvre.

De préférence, le plongeur est disposé dans un logement ménagé axialement dans le bouton de commande.

Grâce à cette disposition supplémentaire, les moyens de crantage ne coopèrent pas avec le boîtier. En outre, l'appui du frotteur sur le bouton de commande permet de compenser le jeu du bouton de commande en façade de boîtier.

Selon un mode de réalisation préféré, l'organe de manoeuvre est constitué par un levier monté sur le boîtier de manière à pouvoir pivoter autour d'un axe de pivotement décalé par rapport à l'axe de rotation du bouton de commande, et la zone crantée comporte des creux disposés en arc de cercle autour de l'axe de pivotement.

Selon une variante de réalisation, l'organe de manoeuvre est monté coulissant sur le boîtier perpendiculairement à l'axe de rotation du bouton de commande et est entraîné par un système pignon crémaillère.

D'autres avantages et caractéristiques de l'invention ressortiront à la lecture de la description suivante faite à titre d'exemple et en référence aux dessins annexés dans lesquels :
la figure 1 montre un dispositif de commande selon un premier mode de réalisation de l'invention ;
la figure 2 montre une variante du dispositif de commande de la figure 1 ;
la figure 3 est une vue de la face interne du levier du dispositif de commande de la figure 1 ;
la figure 4 montre schématiquement un dispositif de commande selon un deuxième mode de réalisation de l'invention ; et
la figure 5 est une vue en coupe selon la ligne V-V de la figure 4.

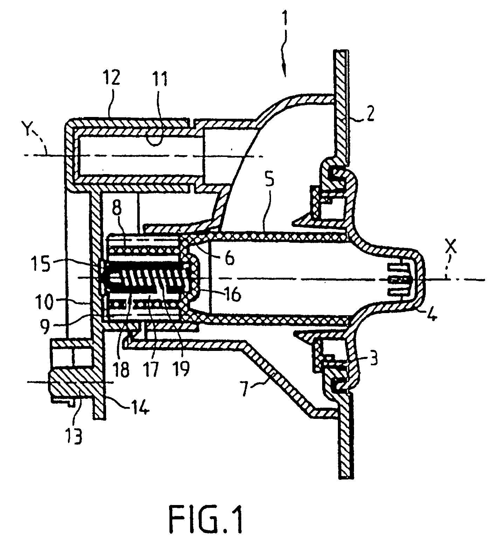

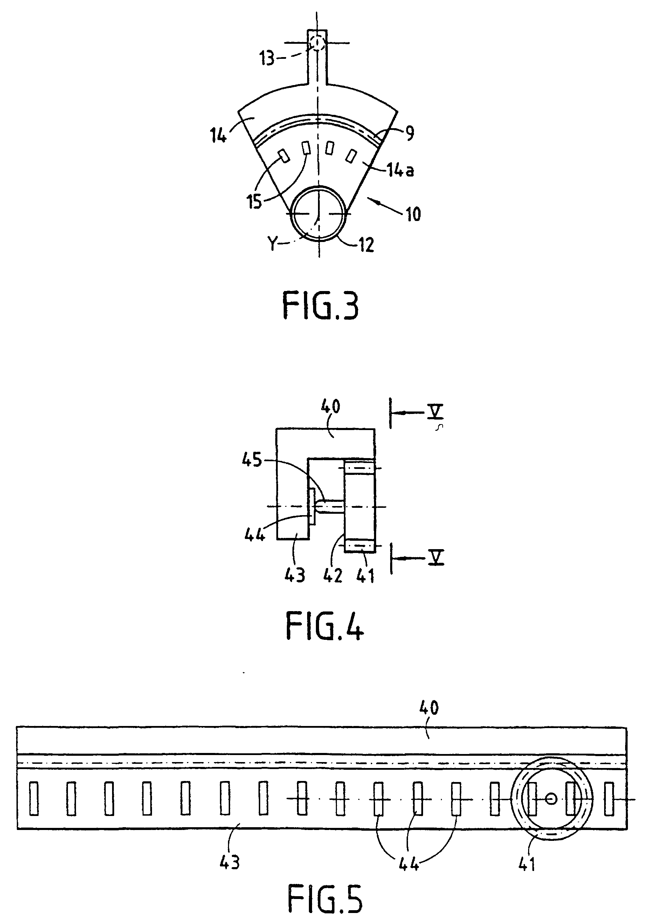

Sur la figure 1 on a représenté par la référence 1 un boîtier de commande qui comporte sur sa façade avant 2 un orifice circulaire 3 d'axe X pour le montage à rotation d'un bouton de commande 4 solidaire d'un arbre creux 5 dont l'extrémité libre est guidée à rotation autour de l'axe X dans un manchon 6 formé dans le fond 7 du boîtier 1. L'extrémité de l'arbre 5 se termine par un pignon droit 8, d'axe X qui engrène avec une couronne dentée 9 d'un levier 10 monté pivotant autour d'un axe Y parallèle à l'axe X et décalé par rapport à ce dernier. Un tourillon 11 d'axe Y est formé sur le fond 7 du boîtier 1. Ce tourillon 11 est coiffé par une douille 12 solidaire du levier 10. Ce levier 10 se présente sous la forme d'un secteur de disque d'axe Y dont la périphérie présente des moyens d'accrochage 13 d'une tige de manoeuvre ou d'un câble de manoeuvre. La couronne dentée 9 d'axe Y s'étend à partir de la face 14 du levier 10 située en regard du fond 7 du boîtier 1. Ainsi que cela est visible sur les figures 1 et 3, la face 14 du levier 10 comporte également une pluralité de creux 15 disposés en arc de cercle autour de l'axe Y dans une zone annulaire 14a susceptible de se déplacer en regard de l'axe de rotation X du bouton de commande 4, lors du pivotement du levier 10.

L'arbre creux 5 est obturé par une paroi 16 perpendiculaire à l'axe X au voisinage du pignon droit 8. Mais le pignon droit 8 comporte un logement 17 ouvert en regard de la face interne 14 du levier 10. Un plongeur 18 sollicité vers l'extérieur par un ressort 19 est monté coulissant parallèlement à l'axe X dans le logement 17. Le ressort 19 est en appui sur la paroi 16, et l'extrémité du plongeur 18 est en appui glissant sur la zone annulaire 14a du levier 10. Lorsque l'extrémité du plongeur 14 se positionne dans un creux 15, le levier 10 et par le fait même le bouton de commande 4 sont immobilisés par rapport au boîtier 1 en l'absence d'un couple suffisant exercé manuellement sur le bouton de commande 4. Le plongeur 18 sollicité par le ressort 19 et les creux 15 de la zone annulaire 14a constituent ainsi les moyens de crantage du dispositif de commande formé par le bouton de commande 4, l'arbre 5 et le levier 10.

Dans le mode de réalisation montré sur la figure 1, les creux 15 sont disposés entre l'axe Y et la couronne dentée 9.

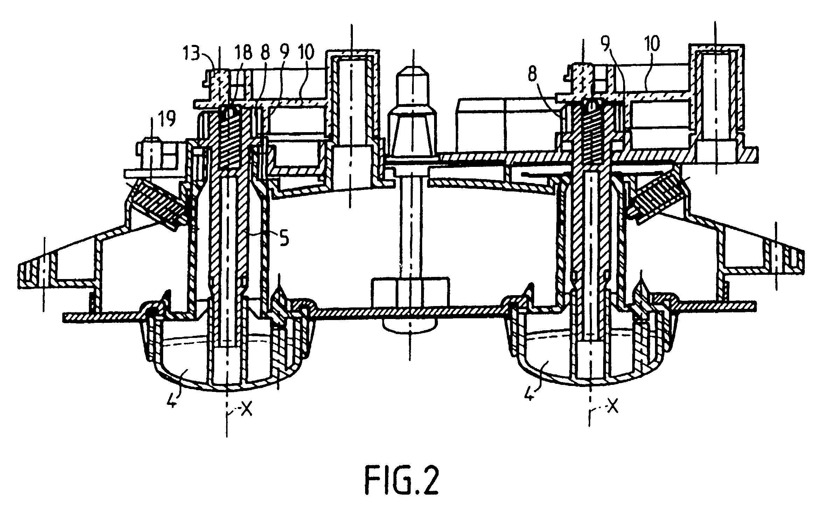

La figure 2 montre un boîtier de commande 1 sur lequel sont montés au moins deux boutons de commande 4 susceptibles d'entraîner chacun en rotation un levier 10 permettant d'agir sur des câbles de commande de volets d'un ensemble de chauffage climatisation pour véhicule automobile par exemple. Les boutons de commande 4 entraînent à rotation des arbres creux 5 d'axe X munis de pignons droits 8 engrenant avec des couronnes dentées 9 équipant les leviers 10 : les couronnes dentées 9 sont dans cette variante de réalisation prévues entre les axes de rotation X des boutons de commande 4 et les axes de pivotement Y des leviers 10. Les arbres creux 5 présentent également des parois transversales 16, perpendiculaires aux axes X et servant d'appui à des ressorts 19 qui sollicitent vers la face interne 14 des leviers 10 des plongeurs 18. La face interne 14 des leviers 10 comporte également en regard des axes X une zone annulaire 14a qui présente une pluralité de creux 15 disposés en arc de cercle autour des axes Y et destinés à coopérer avec les extrémités des plongeurs 18 lors de la rotation des boutons de commande 4.

La figure 4 montre un deuxième mode de réalisation de l'invention qui diffère du mode de réalisation décrit ci-dessus par le fait que le levier 10 est remplacé par une crémaillère 40 montée coulissante sur le boîtier dans une direction perpendiculaire à l'axe de rotation du bouton de commande et qui engrène avec un pignon 41 solidaire d'un bouton de commande. La crémaillère 40 présente en regard de la face d'extrémité 42 du pignon 41 une règle 43 pourvue de fentes 44 parallèles et régulièrement espacées. Les fentes 44 sont destinées à coopérer avec un plongeur 45 sollicité par un ressort et logeant dans une cavité axiale du pignon 41.

Dans les modes de réalisation décrits ci-dessus, les fentes 15 et 44 pourraient être remplacées par des nervures de crantage, ainsi que cela est visualisé sur la figure 5.

## Revendications

1. Dispositif de commande comportant un bouton de commande (4) monté à rotation autour d'un axe (X) sur un boîtier (2), un organe de manoeuvre (10) monté mobile sur ledit boîtier (2) et susceptible d'être déplacé par rotation dudit bouton de commande (4) et des moyens de crantage susceptibles d'immobiliser ledit dispositif par rapport audit boîtier dans une position choisie parmi plusieurs positions prédéterminées,
**caractérisé par le fait que** les moyens de crantage comportent un plongeur mobile (18) disposé coaxialement à l'axe de rotation du bouton de commande et maintenu en appui contre une zone crantée (14a) de l'organe de manoeuvre (10) par des moyens élastiques (19).

2. Dispositif selon la revendication 1, **caractérisé par le fait que** le plongeur (18) est disposé dans un logement (17) ménagé axialement dans le bouton de commande (4).

3. Dispositif selon l'une des revendications 1 ou 2, **caractérisé par le fait que** les moyens élastiques comportent un ressort (19).

4. Dispositif selon l'une des revendications 1 à 3, **caractérisé par le fait que** l'organe de manoeuvre est constitué par un levier (10) monté sur le boîtier (2) de manière à pouvoir pivoter autour d'un axe de pivotement (Y) décalé par rapport à l'axe de rotation (X) du bouton de commande (4).

5. Dispositif selon la revendication 4, **caractérisé par le fait que** la zone crantée (14a) comporte des creux (15) disposés en arc de cercle autour de l'axe de pivotement (Y).

6. Dispositif selon l'une des revendications 1 à 3, **caractérisé par le fait que** l'organe de manoeuvre (10) est monté coulissant sur le boîtier perpendiculairement à l'axe de rotation (X) du bouton de commande (4).

7. Dispositif selon la revendication 1, **caractérisé par le fait que** l'organe de manoeuvre (10) est entraîné par un système pignon/crémaillère (40, 41).

8. Dispositif selon la revendication 7, **caractérisé par le fait que** la crémaillère (40) comporte en regard du pignon (41) une règle (43) pourvue de fentes (44) coopérant avec le plongeur (45).

## Patentansprüche

1. Steuervorrichtung mit einem Steuerknopf (4), der um eine Achse (X) drehbar an einem Gehäuse (2) befestigt ist, mit einem Betätigungsorgan (10), das beweglich am Gehäuse (2) befestigt ist und durch Drehung des Steuerknopfs (4) bewegt werden kann, und mit Einrastmitteln, die die Vorrichtung bezüglich des Gehäuses in einer Stellung arretieren können, die aus mehreren vorbestimmten Stellungen ausgewählt wird,
**dadurch gekennzeichnet, dass** die Einrastmittel einen beweglichen Tauchkolben (18) aufweisen, der koaxial zur Drehachse des Steuerknopfs angeordnet ist und von elastischen Mittel (19) gegen eine mit Rasten versehene Zone (14a) des Betätigungsorgans (10) in Anlage gehalten wird.

2. Vorrichtung nach Anspruch 1, **dadurch gekennzeichnet, dass** der Tauchkolben (18) in einem Sitz (17) angeordnet ist, der axial im Steuerknopf (4) ausgebildet ist.

3. Vorrichtung nach einem der Ansprüche 1 oder 2, **dadurch gekennzeichnet, dass** die elastischen Mittel eine Feder (19) aufweisen.

4. Vorrichtung nach einem der Ansprüche 1 bis 3, **dadurch gekennzeichnet, dass** das Betätigungsorgan aus einem Hebel (10) besteht, der so am Gehäuse (2) befestigt ist, dass er um eine Schwenkachse (Y) schwenken kann, die bezüglich der Drehachse (X) des Steuerknopfs (4) versetzt ist.

5. Vorrichtung nach Anspruch 4, **dadurch gekennzeichnet, dass** die mit Rasten versehen Zone (14a) Aussparungen (15) aufweist, die kreisförmig um die Schwenkachse (Y) angeordnet sind.

6. Vorrichtung nach einem der Ansprüche 1 bis 3, **dadurch gekennzeichnet, dass** das Betätigungsorgan (10) am Gehäuse senkrecht zur Drehachse (X) des Steuerknopfes (4) gleitend montiert ist.

7. Vorrichtung nach Anspruch 1, **dadurch gekennzeichnet, dass** das Betätigungsorgan (10) von einem Ritzel/Zahnstange-System (40, 41) angetrieben wird.

8. Vorrichtung nach Anspruch 7, **dadurch gekennzeichnet, dass** die Zahnstange (40) vor dem Ritzel (41) eine Leiste (43) mit Schlitzen (44) aufweist, die mit dem Tauchkolben (45) zusammenwirken.

## Claims

1. Control device comprising a control knob (4) mounted rotationally about an axis (X) on a housing (2), a manoeuvring member (10) mounted movably on the said housing (2) and capable of being displaced by rotation of the said control knob (4), and indexing means capable of immobilizing the said device relative to the said housing in a position chosen from amongst several predetermined positions, **characterized in that** the indexing means comprise a movable plunger (18) disposed coaxially to the rotational axis of the control knob and held in bearing contact against an indexed zone (14a) of the manoeuvring member (10) by elastic means (19).

2. Device according to Claim 1, **characterized in that** the plunger (18) is disposed in a seat (17) arranged axially in the control knob (4).

3. Device according to either of Claims 1 or 2, **characterized in that** the elastic means comprise a spring (19).

4. Device according to one of Claims 1 to 3, **characterized in that** the manoeuvring member is composed of a lever (10) mounted on the housing (2) so as to be able to pivot about a pivot axis (Y) offset relative to the rotational axis (X) of the control knob (4).

5. Device according to Claim 4, **characterized in that** the indexed zone (14a) comprises cavities (15) disposed in a circular arc around the pivot axis (Y).

6. Device according to one of Claims 1 to 3, **characterized in that** the manoeuvring member (10) is mounted on the housing such that it can slide perpendicularly to the rotational axis (X) of the control knob (4).

7. Device according to Claim 1, **characterized in that** the manoeuvring member (10) is driven by a rack and pinion system (40, 41).

8. Device according to Claim 7, **characterized in that** the rack (40) comprises, facing the pinion (41), a rule (43) provided with slots (44) cooperating with the plunger (45).
